(19)

**Europäisches Patentamt**
**European Patent Office**
**Office européen des brevets**

(11) **EP 4 531 120 A1**

(12) **EUROPEAN PATENT APPLICATION**

(43) Date of publication:
**02.04.2025 Bulletin 2025/14**

(21) Application number: **23201015.7**

(22) Date of filing: **29.09.2023**

(51) International Patent Classification (IPC):
***H01L 33/50*** (2010.01)       ***H01L 33/58*** (2010.01)
***A61C 13/15*** (2006.01)

(52) Cooperative Patent Classification (CPC):
**H10H 20/8512; A61C 19/004; H10H 20/855;**
H10H 20/8513; H10H 20/852

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **I-DENT Innovations for Dentistry SA
1260 Nyon (CH)**

(72) Inventor: **Lutz, Beerstecher
1277 Borex (CH)**

(74) Representative: **Wächtershäuser & Hartz
Patentanwaltspartnerschaft mbB
Weinstraße 8
80333 München (DE)**

(54) **DENTAL CURING LIGHT**

(57)    The present invention relates to a dental curing light adapted to provide radiation output having a light intensity of at least 1000 mW/cm2, the radiation output comprising a first peak in the electromagnetic radiation spectrum in the range of from 395 to 410 nm, a second peak in the range of 450 to 470 nm, the dental curing light comprising:

(a) at least one solid-state light source units adapted to emit primary radiation having a peak in the range of from 395 to 410 nm, each solid-state light source unit having a light emitting outer surface;

(b) a first layer covering at least a portion of the outer surface of each of the one or multiple solid-state light source units, the first layer comprising a first particulate phosphor absorbing a part of the primary radiation and converting the primary radiation into a secondary radiation having a different wavelength by fluorescing with a peak in the range of from 450 to 470 nm and/or 420 to 440 nm, the first particulate phosphor being dispersed in a continuous phase transparent to the primary and secondary radiation peaks, the first layer having a light emitting outer surface;

(c) an encapsulant layer of transparent resin covering the outer light emitting outer surface,

wherein the at least one solid state light source units are facing the input end of a light guide or a lens facing the tooth surface, and
wherein the intensity ratio of the first and second peaks is adjusted to a ratio of 1:3 to 1:4.

EP 4 531 120 A1

**Description**

**Field of the Invention**

The present invention relates to a dental curing light adapted to provide radiation output having a high and uniform intensity across the entire radiating cross-section of the dental curing light, the radiation output containing essentially two or more, notably three or four, specific wavelengths peaks in a specific intensity ratio, and presenting a low potential for excessive heat generation in soft dental tissue.

**Background of the Invention**

Dental curing lights are known. Cordless dental curing lights typically are composed of a handpiece containing an LED such as a high power blue light LED, and a battery, for example a rechargeable lithium battery, for generating light, which is directed by an optical fiber assembly to the surface of a tooth. The handpiece may be charged in a charging cradle adapted to be connected by an adapter to an electrical grid.

A dental curing light is used to polymerize (harden) light-cure resin-based dental material. Dental curing lights are primarily used for curing fillings, sealants, and adhesives for various dental procedures. The light emitted by the curing light initiates a reaction in a light-sensitive polymerizable composition, causing it to harden and set.

Ideally, the radiating cross-section of the dental curing light should be large enough to cover the entire surface of the dental material to be cured. However, as the area to be irradiated increases, maintaining a consistent light intensity across the entire surface area becomes problematic. The center of the irradiated area typically receives more intense light than the edges, leading to uneven curing. The inconsistency in light intensity can result in some parts of the resin being under-cured. An under-cured resin can lead to post-operative sensitivity, reduced bond strength, and a higher likelihood of restoration failure.

To address this problem, it is known to increase the radiating cross-section of the dental curing light by increasing the number of LED chips, whereby an array of LED chips is used. Accordingly, it is possible to maintain a maximum intensity of the light even at the edges of the cured surface, so that the resin material is sufficiently cured.

Also, if the practitioner recognizes the decreased intensity over a larger area, the resin might need to be cured in smaller sections or for more extended periods, increasing the overall treatment time. To compensate for the potential decrease in light intensity over a larger area, practitioners might be tempted to increase the curing time which may result in the following additional problem. In general, increased curing time and larger irradiated areas can lead to increased heat generation, which can cause discomfort to the patient and may even damage the pulp at the innermost part of the tooth containing nerves and blood vessels. Given that the polymerization initiators used in dental compositions only absorb in a narrow range of the electromagnetic spectrum, any adjacent wavelength potentially results in undesirable heat generation.

Finally, the larger the irradiated area, the more challenging it is to ensure that the light penetrates deep enough to cure thicker layers of composite, which can be especially problematic in deeper cavities where the composite layer is thicker.

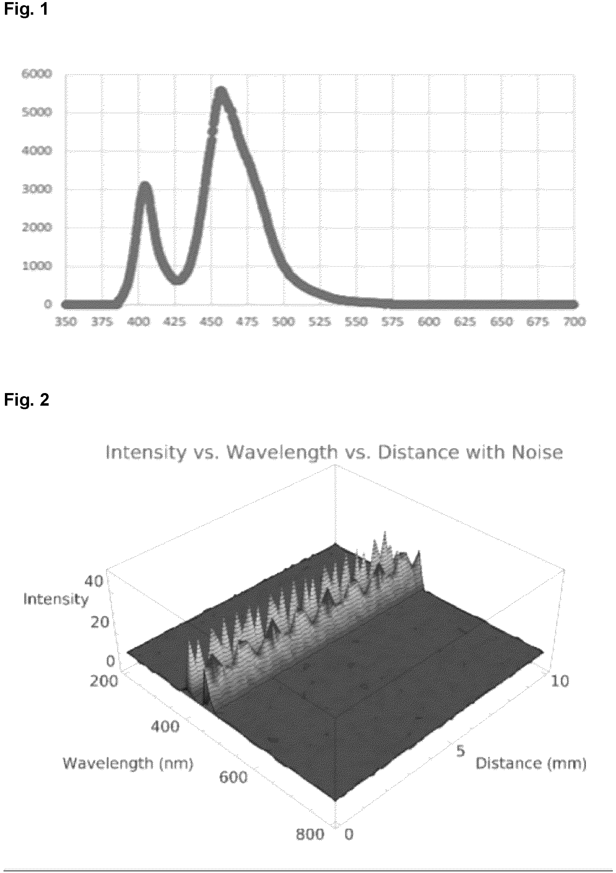

Dental curing lights irradiating with peaks at different wavelengths are also known. Fig. 1 shows an example for an intensity plot as a function of the wavelengths which may be expected for a dual-wavelength LED curing light. Typically, different LED chips are used in an array of multiple LED chips. For example, a high-powered, dual-wavelength LED curing light has been introduced by the present inventor, which uses a combination of two different LED emitters (blue and violet) with peaks at both 460-465nm (in camphor quinone peak) and 400-405nm (in PPD/TPO peaks) to produce multiple peaks in the wavelength spectrum. Considering the light output, the intensity distribution of the two different wavelengths across the radiating surface of the dental curing light is inhomogeneous. In the proximity of the violet LED emitter, the peaks at 400-405nm are more intense than the peaks at 460-465nm. Conversely, in the proximity of the blue LED emitter, the peaks at 460-465nm nm are more intense than the peaks at 400-405nm. In Fig. 2, a typical qualitative spectrum of a dental curing light is shown wherein multiple different LED emitters are used. Accordingly, the intensity of the radiation output changes as a function of the distance and the position within the irradiating cross-section so that a homogenous curing cannot be expected.

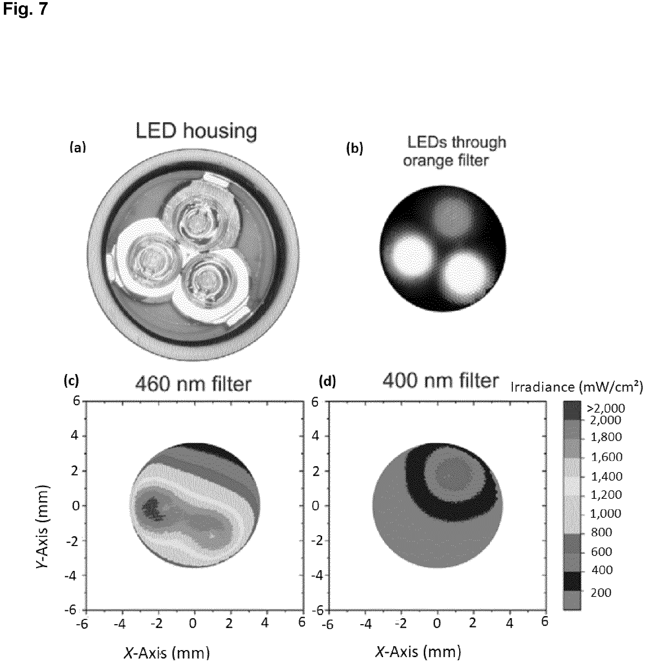

Price, R. B. et al. (International Dental Journal 2020; 70: 407-417) describe a dual-wavelength peak LED curing light that has one violet light and two blue LED emitters in the light-curing unit. Fig. 7 shows the beam profile reported by Price *et al.* Accordingly, when the light output at the tip is viewed through blue-light blocking orange glasses, the output from the one violet and two blue LEDs is visible, and 'hot spots' of high irradiance are also evident. The image shows that the light is not well mixed. The beam profile also shows the active diameter of the tip from where light is emitted. To adequately light cure the entire surface of the cavity preparation or restoration with a single exposure, the active light tip area should completely cover the whole surface. To be practical, an overlap of 1 mm beyond the restoration would be ideal, as this will allow for some small movements at the light tip. However, as shown by Figure 7, the distribution of the wavelengths and the tip irradiance are clearly not uniform (see Fig. 7 (b)). Instead, they correspond to the location (a) of the two blue and one violet light-emitting diode (LED) emitters in the light curing unit housing. When the same light is imaged through either a 460 nm (see Fig. 7 (c)) or a 400 nm (see Fig. 7 (d)) narrow bandpass filter into a beam profiler camera, large differences in the irradiance exist as a function of the wavelength and the position in the radiating cross-section of the light-curing unit.

**Summary of the Invention**

It is the problem of the present invention to provide a dental curing light adapted to provide radiation output having a light intensity of at least 1000 mW/cm$^2$, the radiation output comprising a first peak in the electromagnetic radiation spectrum in the range of from 395 to 410 nm and a second peak in the range of 450 to 470 nm, wherein the light output has a uniform intensity of the at least two different wavelength peaks across the entire radiating cross-section of the dental curing light, and wherein the light intensity is limited to the desired wavelength peaks for optimum curing while avoiding excessive heat generation potentially damaging soft dental tissue.

The present invention provides a dental curing light adapted to provide radiation output having a light intensity of at least 1000 mW/cm$^2$, the radiation output comprising a first peak in the electromagnetic radiation spectrum in the range of from 395 to 410 nm, a second peak in the range of 450 to 470 nm, the dental curing light comprising:

(a) at least one solid-state light source units adapted to emit primary radiation having a peak in the range of from 395 to 410 nm, each solid-state light source unit having a light emitting outer surface;

(b) a first layer covering at least a portion of the outer surface of each of the one or multiple solid-state light source units, the first layer comprising a first particulate phosphor absorbing a part of the primary radiation and converting the primary radiation into a secondary radiation having a different wavelength by fluorescing with a peak in the range of from 450 to 470 nm and/or 420 to 440 nm, the first particulate phosphor being dispersed in a continuous phase transparent to the primary and secondary radiation peaks, the first layer having a light emitting outer surface;

(c) an encapsulant layer of transparent resin covering the outer light emitting outer surface,

wherein the at least one solid state light source units are facing the input end of a light guide or a lens facing the tooth surface, and

wherein the intensity ratio of the first and second peaks is adjusted to a ratio of 1:3 to 1:4.

The present invention is based on the recognition that by using solid-state light source units having a specific layer, which emit light of two or more wavelength peaks, one or more solid-state light source units may be used to cover the entire surface to be cured with the irradiating cross-section of the dental curing light while maintaining a consistent and uniform light intensity of at least two different wavelength peaks across the entire area, notably when an array of solid-state light source units is used. According to the invention, the intensity of at least two different wavelength peaks at the center of the irradiated area is essentially the same as at the edges whereby an even curing may be expected for each of the at least two different wavelength peaks. Therefore, the problem that some parts of the resin are under-cured, which can lead to post-operative sensitivity, reduced bond strength, and a higher likelihood of restoration failure, is avoided.

Moreover, given the uniformly high intensity of at least two different wavelength peaks over a large area, curing in smaller sections or for more extended periods, increasing the overall treatment time, may also be avoided.

Moreover, even in case of larger irradiated areas, an increased heat generation may be avoided because the radiation output is limited to separate and discrete peaks of wavelength with low bandwidth, optimized to be well absorbed by the referring photo-initiator. Accordingly, the irradiated light is essentially absorbed by the photoinitiator molecules. The selective radiation in the wavelength range of the photoinitiators and the high overall intensity contributes to light penetrating deep enough to cure thicker layers of composite without excessive heat generation.

According to the present invention, the wavelength distribution as shown in Fig. 2 is provided evenly across the entire radiating cross section. Specifically, the wavelength distribution is essentially the same at every point in the radiating cross section or on the surface of each individual solid-state light source unit, in particular LED chip within a matrix. The intensity distribution is different from the prior art, wherein an LED matrix with different LEDs (e.g. 1 violet and 3 blue) provides an intensity spectrum which is different at different locations of the irradiated cross section. The height of the peaks varies depending on the location within the irradiating cross section and one or another peak may even disappear completely.

**Brief description of the Figures**

Fig. 1 is an intensity plot as a function of the wavelength of an embodiment according to the present invention.

Fig. 2 shows a light intensity spectrum of a typical dental curing light from the prior art, having an array of LED chips irradiating at two different wavelength peaks.

Fig. 3 shows a light intensity spectrum of a dental curing light according to the present invention ideally irradiating at two different wavelength peaks.

Fig. 4 is a side view of an embodiment of the dental curing light of the present invention.

Fig 5 is a cross-section along A-A of the handpiece of the present invention as shown in Fig. 4.

Fig. 6 is a detailed view of the cross-section shown in Fig. 5 showing the arrangement of an LED with a reflector (additional collimating component) and lens for concentrating the light into a light guide input.

Fig. 7 is based on Fig. 4 of Price, R. B. et al. International Dental Journal 2020; 70: 407-417.

**Description of the preferred embodiments**

The term "radiation output" refers to the quantity and quality of light emitted by the dental curing light for the purpose of curing dental materials like dental resins or dental adhesives. The radiation output is measured at the output end of the light guide of the dental curing light using a beam profile camera such as a standard beam profiler CCD camera (Ophir, Model SP503U, Ophir-Spiricon, Logan, Utah, United States) (Shortall AC, Felix CJ, Watts DC. Robust spectrometer-based methods for characterizing radiant exitance of dental LED light curing units. Dent Mater 2015;31(4):339-350) whereby the images are captured using the BeamGage Standard software. The radiation output is characterized by the wavelength, intensity, spectral distribution, duration, and uniformity of the radiation output. The specific range of wavelengths of the radiation output emitted by the dental curing light of the present invention comprise at least two peaks in the blue and violet spectrum. The intensity may be measured in milliwatts per square centimeter ($mW/cm^2$). The intensity of the light of the desired wavelengths in the light output determines how effectively and quickly the material will cure. Higher intensities generally result in faster curing times but must be carefully managed to avoid overheating. The spectral distribution refers to the range and balance of wavelengths in the radiation output. The duration refers to the length of time the light is applied and contributes to the effectiveness of the curing process. The uniformity of the radiation output refers to the evenness of the light emitted across the radiating cross-section, and affects how uniformly the dental material will cure. Uneven radiation output can lead to inconsistent curing.

The term "radiating cross-section" in relation to a dental curing light, refers to the effective area of the light guide that is actively involved in emitting light. The radiation output of the radiating cross-section of the dental curing light corresponds to the radiation output of the portion of the solid-state light source unit that contributes to the generation and emission of photons when an electric current is applied. The radiating cross-section may be expressed in square millimeters ($mm^2$) and can be determined through microscopic examination, for example.

The present invention provides a dental curing light. The dental curing light is preferably a cordless dental curing light. Preferably, the dental curing light of the present invention is a lightweight and portable Light Emitting Diode (LED) curing light providing a long lifespan, energy-efficient, produces less heat, and provides a short curing time. Preferably, the dental curing light of the present invention is composed of a handpiece containing an array of solid-state light source units such as LED chips, and a rechargeable battery, wherein the generated light is directed by an optical fiber assembly to the surface of a tooth. Preferably, the handpiece may be charged in a charging cradle adapted to be connected by an adapter to an electrical grid.

The dental curing light of the present invention is adapted to provide radiation output having a light intensity of at least 1000 $mW/cm^2$, preferably at least 1400 $mW/cm^2$. More preferably, the dental curing light of the present invention provides radiation output having a light intensity in the range of 1000 to 3500 $mW/cm^2$. The light intensity may be controlled by controlling the current or the voltage applied to the solid-state light source, notably LED chip. Alternatively or additionally, the light intensity may be controlled by using a software control.

The most straightforward way to control the light intensity of an LED chip is by controlling the current flowing through it, since the brightness of an LED is directly proportional to the current flowing through them. Alternatively, Pulse Width Modulation (PWM) may be used, which involves turning the LED on and off at a very high frequency. The ratio of the "on" time to the "off" time (duty cycle) efficiently determines the perceived brightness, notably in microcontroller-based systems.

For voltage control, a potentiometer can be used to vary the resistance in the circuit, thereby changing the voltage drop across and LED and controlling its intensity. In computer-controlled LED setups, driver software can be used to control the intensity of the LED.

In a specific embodiment, a photodiode can be used to monitor the solid-state light unit brightness, and a feedback loop can adjust the current to maintain a constant brightness. Also, since LEDs can lose efficiency and brightness at high temperatures, a temperature feedback to adjust the LED current and maintain brightness may be used.

The radiation output of the dental curing light of the present invention comprises a first peak in the electromagnetic radiation spectrum in the range of from 395 to 410 nm, a second peak in the range of 450 to 470 nm. The intensity ratio of the first and second peaks is adjusted to a ratio of 1:3 to 1:4, preferably 1:3.2 to 1:3.8. According to a specific embodiment, the radiation output comprises a third peak in the electromagnetic radiation spectrum in the range of 420 to 440 nm. The intensity ratio of the first, second and third peaks is adjusted to a ratio of 1:3:1 to 1:5:4, preferably 1:3.1 to 1:3.8:3.8. According to a preferred embodiment of the present invention, the intensity ratio of the first and second peaks and optional third is adjusted by the thickness, or the covering percentage of the said coating layer, or the concentration of the first, second and/or third particulate phosphor.

The dental curing light according to the present invention comprises at least one solid-state light source unit adapted to emit primary radiation having a peak in the range of from 395 to 410 nm. Preferably, the at least one solid-state light source unit is a violet LED. A violet LED chip is a type of light-emitting diode that emits light in the violet range of the electromagnetic spectrum, around 380 to 450 nm, and has a peak in the range of from 395 to 410 nm. A preferred violet LED is designed to be highly efficient, converting most of the electrical energy into light with minimal heat generation. The violet LED according to the present invention may comprise indium gallium nitride (InGaN) or aluminum gallium indium phosphide (AlGaInP). Preferably, a violet LED for used in the present invention may be small and can be integrated into various form factors, notably an array. Preferably, the violet LEDs typically have a long operational life, preferably of at least 25,000 hours. According to a preferred embodiment, the intensity of the emitted light can be controlled by varying the current flowing through the chip.

Suitable violet LED chips are known from the prior art and are commercially available.

According to a preferred embodiment, the dental curing light comprises at least four, at least 6, or at least 8 solid state light sources, which are arranged in an array. An array of solid-state light sources, in particular LED chips, is a configuration where multiple solid state light sources including LEDs are arranged in a specific arrangement approximating or matching the contour of the input end of the light guide. The arrangement can be linear, square, rectangular, or even more complex. Preferably, the pattern is a circular, square or rectangular pattern, most preferably a circular or square pattern when a light guide with a circular contour of the input end is used. The array of solid-state light sources including LEDs can provide a more uniform light distribution compared to a single LED source, in particular if a light guide having a diameter of more than 2 mm is used. The collective brightness of multiple solid state light source units including LEDs in an array can achieve a higher light output than individual LEDs. Moreover, the size and number of solid-state light source units including LEDs in an array can be scaled to fit specific requirements.

According to a preferred embodiment, the solid-state light sources including LEDs in an array can be individually controlled, allowing for dynamic lighting effects and adjustments of the light intensity. An array of solid-state light sources including LEDs can be compact, making them suitable for applications where space is limited.

Preferably, each solid state light source including LED in the arrays is provided with built-in heat management systems, such as heatsinks or cooling fans, especially in high-power applications. Advantageously, the multiple light source units in an array can reduce shadows, providing more even illumination. The array can be designed to focus light in specific directions.

Each solid-state light source unit has a light emitting outer surface. The light emitting outer surface comprises the top surface of the at least one solid-state light source units. The light emitting outer surface may also comprise one or more side surfaces of the at least one solid-state light source units.

The dental curing light according to the present invention comprises a first layer covering at least a portion of the outer surface of each of the one or multiple solid-state light source units. The first layer comprises a first particulate phosphor. The particulate phosphor serves to convert primary radiation into secondary radiation with different wavelengths. This process is known as phosphor conversion which involves the following steps. When primary radiation strikes the particulate phosphor, the phosphor material absorbs the energy. The absorbed energy excites the electrons in the phosphor material to higher energy states. As the excited electrons return to their ground state, they release energy in the form of photons. This emitted light is the secondary radiation. The emitted photons have a longer wavelength (lower energy) compared to the absorbed photons (Stokes shift). By selecting the type of phosphor and its concentration, it is possible to control the wavelength of the emitted secondary radiation. According to the present invention, the particulate phosphor absorbs a part of the primary radiation and converts the primary radiation into a secondary radiation having a different wavelength by fluorescing with a peak in the range of from 450 to 470 nm and/or 420 to 440 nm. The first particulate phosphor being dispersed in a continuous phase transparent to the primary and secondary radiation peaks, the first layer having a light emitting outer surface. Accordingly, the first particulate phosphor absorbs some of the primary radiation emitted by the solid-state light source units. After absorbing the primary radiation, the phosphor becomes excited and then relaxes by emitting light at a different wavelength, known as secondary radiation. The secondary radiation emitted by the phosphor has a peak wavelength in the range of either 450 to 470 nm or 420 to 440 nm.

Preferably, the particulate phosphor is characterized by particle properties enhancing the performance, including its efficiency, color rendering, and reliability. Specifically, the average particle size as measured using dynamic light scattering with a Zetasizer (Malvern Ltd, UK). Preferably, the average particle size is in the range of from 1 to 30 nm, more preferably 3 to 20 nm. Preferably, the particle size distribution of the particular phosphor is monomodal. The shape of the particles is not particularly limited and can be spherical, rod-like, or irregular. The chemical composition of the phosphor determines its ability to absorb and emit light at specific wavelengths. Accordingly, phosphors are doped with rare-earth or transition metals to modify their optical properties. Preferably, the particulate phosphor comprises:

$LiCaPO_4: EU_{2+}$

$Ba_3LaNa(PO_4)_3F: Eu_{2+}$

$BaHfSi_3O_9: Eu_{2+}$

$Ca_2LuScZrAl_2GeO_{12}: Ce_{3+}$

$Ca_3Hf_2SiAl_2O_{12}: Ce_{3+}$

$Ca_3Zr_2SiGa_2O_{12}: Ce_{3+}$

$CaLaGa_3S_6O: Ce_{3+}$

$Ca_2B_5O_9Br: Eu_{2+}$

$Na_{3-2x}Sc_2(PO_4)_3: xEu_{2+}$

$SrLu_2O_4: Ce_{3+}$

$(Sr,Mg)_2SiO_4: Eu_{2+}$

A higher surface area can increase the interaction with light but may also make the particles more susceptible to degradation. According to a specific embodiment, phosphor particles may be coated with protective materials to enhance stability and improve performance. Preferably, the particulate phosphors of the present invention have a high quantum efficiency. Quantum efficiency is a measure of how efficiently a phosphor converts absorbed photons into emitted photons. It is expressed as a ratio or percentage and is calculated using the following formula:

$$\text{Quantum Efficiency (QE)} = \frac{\text{Number of Photons Emitted}}{\text{Number of Photons Absorbed}} \times 100$$

Phosphors may have a QE in the range of 10-99%. Preferably, the phosphors used in the present invention have a QE in the range of 50-99%, more preferably 80 to 99%, still more preferably 90 to 95 %.

Preferably, the phosphor particles are evenly dispersed in a continuous phase (likely a solid or gel-like material) that is transparent to both the primary and secondary radiation, which ensures that the light can pass through without being blocked or scattered in undesired directions. Accordingly, the first layer itself has a light-emitting outer surface so that the residual primary radiation and secondary radiation emitted by the phosphor exits from this layer, making it the effective light source for curing dental materials. The use of phosphors allows the dental curing light of the present invention to emit light at wavelengths that are most effective for curing specific dental materials, even if the original light source does not emit light at those wavelengths. By converting only a part of the primary radiation into secondary radiation, the device can maintain a balanced spectral output that is beneficial for the curing process. The dispersion of phosphor in a continuous phase ensures that the emitted light is uniform, which is crucial for consistent and effective curing. The continuous phase's transparency ensures that the light (both primary and secondary) can pass through efficiently, maximizing the device's overall effectiveness. Examples of the continuous phase are optically clear epoxy-resin, silicone or low melting glass.

The dental curing light according to the present invention further comprises an encapsulant layer of transparent resin covering the outer light emitting outer surface. The encapsulant layer is to protect the solid-state light source units, such as the LED chips, and its internal components from external environmental factors, such as moisture, dust, and mechanical damage. Additionally, the encapsulant layer adjusts light dispersion, ensuring that the emitted light is spread out uniformly. The encapsulant is preferably made of a transparent resin selected from a silicone, epoxy, or polyurethane resin. Preferably, the encapsulant is a silicone resin. Silicone resin encapsulants are based on organosilicon polymers. The basic structural unit of silicone consists of a silicon atom bonded to two oxygen atoms, forming a Si-O-Si backbone. Organic groups, usually methyl ($CH_3$) or phenyl ($C_6H_5$) groups, are attached to the silicon atoms. Accordingly, silicone resins comprise a backbone of the follwing type: -Si - O - Si - O - Si - O - which further contains side groups R, where R may be selected from $-CH_3$, $-CH_2CH_3$, or $-C_6H_5$. The silicone polymer can be linear, branched, or cross-linked. For example, the silicone resin may comprise linear polydimethylsiloxane (PDMS), or branched PDMS, or network polymers of PDMS formed by cross-linking agents, providing the silicone resin with excellent thermal and mechanical properties.

The encapsulant material is characterized by optical clarity in the range of the first and second peak. In case a third peak is present, the encapsulant material is characterized by optical clarity in the range of the third peak. A transparent resin ensures that the maximum amount of light emitted by the solid-state light source unit can pass through without significant absorption or scattering, maintaining the light output efficiency. Preferably, the refractive index of the encapsulant material is adapted to reduce the total internal reflection within the solid-state light source unit, allowing more light to be emitted outwards. The encapsulant layer provides a barrier against moisture, which can be detrimental to the performance and lifespan. It also offers protection against dust, contaminants, and potential oxidation of internal components. The encapsulant layer may add a level of mechanical protection of a delicate LED chip and internal wire bonds from potential damage due to handling, vibration, or impact. The encapsulant layer may be molded into specific shapes, such as domes or lenses, to direct or focus the emitted light in desired patterns or angles. The encapsulant layer may contain additives or secondary materials, such as additional phosphors. In such cases, the blue light from the LED chip excites the phosphor within the encapsulant layer, which then emits a different color of light.

According to a preferred embodiment of the present invention, the at least one solid state light source units are arranged in an array facing the input end of a light guide. The primary purpose of a light guide is to collect, channel, and direct the emitted light towards the dental material that needs to be cured. When an array of light sources (e.g., LEDs) faces the input end of the light guide, a maximum amount of light is captured and funneled through the guide, which may lead to more efficient light collection and better curing performance. An array of light sources provides a more uniform light distribution across the input end of the light guide, in particular when the area of the input end of the light guide is large. This uniformity ensures that the light exiting the output end of the guide is also evenly distributed, leading to consistent curing across the dental material. Multiple light sources in an array can collectively produce a higher light intensity than a single source. When this intense light is channeled through the light guide, it can lead to faster curing times for dental materials.

According to a further preferred embodiment, the dental curing light according to the present invention allows dynamic control where individual lights or groups of lights can be activated or deactivated based on the curing requirements, which can allow for customized curing profiles or patterns.

According to a preferred embodiment of the present invention, the solid-state light source units are preferably light emitting diodes. Further examples for solid-state light source units are Organic Light Emitting Diodes (OLEDs), laser diodes, Superluminescent Diodes (SLDs), and photonic crystal LEDs.

According to a preferred embodiment of the present invention the first layer comprises a second particulate phosphor fluorescing with a peak in the range of from 420 to 440 nm, dispersed in the continuous phase. The second phosphor may be preferably $NaAlSiO_4$: $Ce^{3+}$, $Mn^{2+}$.

According to a preferred embodiment of the present invention, the dental curing light further comprises a second layer covering at least a portion of the light emitting outer surface of the first layer of each solid-state light source units, the second layer comprising a particulate phosphor absorbing a part of the primary radiation and converting the primary radiation into a secondary radiation having a different wavelength by fluorescing with a peak in the range of from 420 to 440 nm, the particulate phosphor being dispersed in a continuous phase transparent to primary and secondary radiation peaks, the second layer having a light emitting outer surface.

According to a preferred embodiment of the present invention, the continuous phase of the first or second layer may be the same or different and is selected from a resin, glass or silicone. According to a further preferred embodiment of the present invention, the continuous phase has a refractive index which is within 5% of the refractive index of the material of the solid-state light source.

According to a preferred embodiment of the present invention, the first and/or second layers are coating layers which may be applied by conventional coating techniques. According to a preferred embodiment of the present invention, the top surface of each solid-state light source unit, and preferably the lateral surfaces of each solid-state light source unit, is coated.

According to a preferred embodiment of the present invention, the area of the first and second peaks under the intensity curve represents at least 80 % of the area of the output spectrum in the range of from 200 to 800 nm.

Moreover, according to a preferred embodiment of the present invention, the intensity of a specific wavelength has a uniformity of at least 70% so that the difference between the highest and the lowest intensity at the specific wavelength is at most 30 % across the entire irradiating cross-section. According to a more preferred embodiment of the present invention, the intensity of a specific wavelength has a uniformity of at least 80% so that the difference between the highest and the lowest intensity at the specific wavelength is at most 20 % across the entire irradiating cross-section.

Dental resins and composites are formulated to polymerize (harden) when exposed to specific wavelengths of light. If most of the emitted light from the curing device is concentrated around these wavelengths (the peaks), it ensures efficient and rapid polymerization of the dental material. Light emitted outside the optimal curing wavelengths might not contribute effectively to the curing process and can be considered wasted energy. By concentrating most of the light output within the peaks that are most effective for curing, the device operates more efficiently, with less wasted energy which in turn can lead to heat generation. A concentrated intensity at the desired wavelengths can lead to a deeper and more consistent cure within the dental material. This is crucial for ensuring the longevity and structural integrity of dental restorations. With a higher proportion of the light output concentrated at the effective curing wavelengths, the required exposure time to achieve a complete cure can be reduced. This can lead to shorter treatment times, improving the patient experience and increasing the efficiency of dental procedures. Furthermore, by optimizing the light output for the most effective curing wavelengths, the device can achieve the desired results in shorter time spans, potentially extending the battery life of cordless dental curing lights. Finally, by focusing the light output on the most effective curing wavelengths and minimizing extraneous emissions, there's a potential reduction in heat generation. This can enhance patient comfort and reduce the risk of thermal damage to the oral tissues.

According to a preferred embodiment of the present invention, the entire area covered by the one or more solid-state light source units arranged in the dental curing light may be covered by a circle having a diameter of at least 6 mm, more preferably at least 8 mm.

According to a preferred embodiment of the present invention, the light guide is selected from optical fibers, waveguides, and light pipes. In case of optical fibers, a bundle of multiple optical fibers may be used.

According to a preferred embodiment of the present invention, the input end input end is coupled with lenses or other optical components to focus or collimate the incoming light.

The present invention will now be further explained based on the figures.

As shown in Fig. 2, the light intensity spectrum of a typical dental curing light from the prior art, emitting at two different wavelengths is not uniform in a dimension of the radiating cross-section. Specifically, the intensity at a specific wavelength changes as a function of the distance so that a uniform curing cannot be expected. Moreover, the intensity ratio of the different wavelength as a function of the distance changes randomly, which prevents a tight control of uniform polymerization conditions.

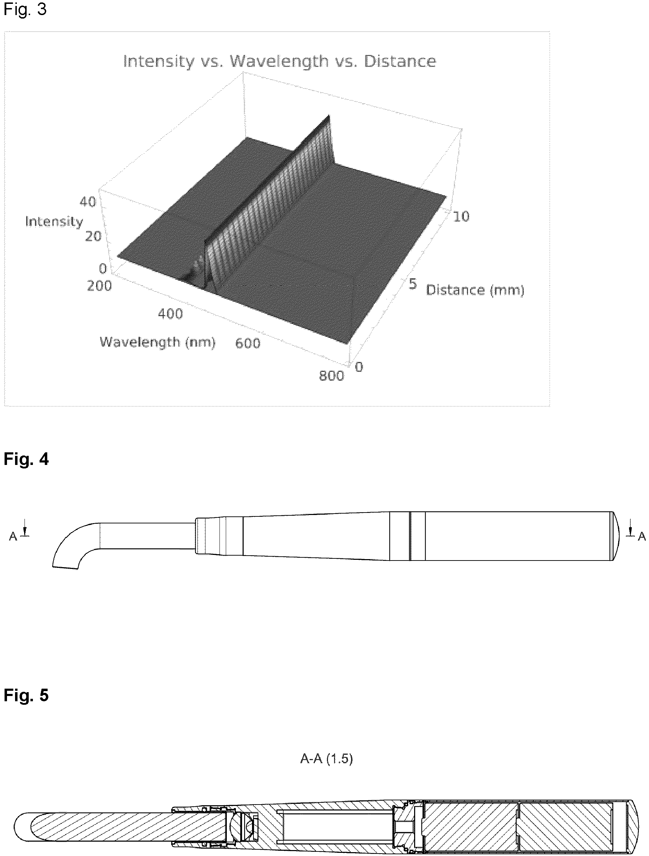

As shown by Fig. 3 the light intensity spectrum of a dental curing light according to the present invention, is uniform in a dimension of the radiating cross-section. Specifically, the intensity at a specific wavelength does not change as a function of the distance so that a uniform curing may be expected. Moreover, the intensity ratio of the different wavelength as a function of the distance does not change so that a tight control of uniform polymerization conditions is possible.

The side view of Fig. 4 of an embodiment of the dental curing light of the present invention shows a cordless dental curing lights composed of a handpiece 1 containing an LED 2 such as a high power blue light LED, and a battery 3, for example a rechargeable lithium battery, for generating light, which is directed by an optical fiber assembly 4 to the surface of a tooth (not shown). The handpiece may be charged in a charging cradle adapted to be connected by an adapter to an electrical grid.

Fig. 5 shows a cross-section of the view of the handpiece of the present invention as shown in Fig. 4.

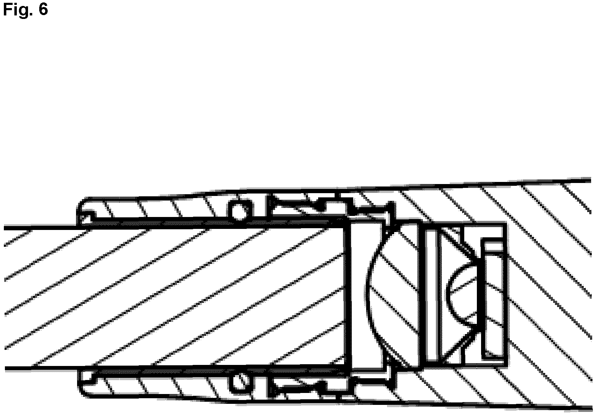

Fig. 6 shows a detailed view of the cross-section shown in Fig. 4 showing the arrangement of an LED with a reflector (additional collimating component) and lens for concentrating the light into a light guide input.

Fig. 7 is based on Fig. 4 of Price, R. B. et al. International Dental Journal 2020; 70: 407-417.

## Claims

1. A dental curing light adapted to provide radiation output having a light intensity of at least 1000 mW/cm$^2$, the radiation output comprising a first peak in the electromagnetic radiation spectrum in the range of from 395 to 410 nm, a second peak in the range of 450 to 470 nm, the dental curing light comprising:

   (a) at least one solid-state light source units adapted to emit primary radiation having a peak in the range of from 395 to 410 nm, each solid-state light source unit having a light emitting outer surface;
   (b) a first layer covering at least a portion of the outer surface of each of the one or multiple solid-state light source units, the first layer comprising a first particulate phosphor absorbing a part of the primary radiation and converting the primary radiation into a secondary radiation having a different wavelength by fluorescing with a peak in the range of from 450 to 470 nm and/or 420 to 440 nm, the first particulate phosphor being dispersed in a continuous phase transparent to the primary and secondary radiation peaks, the first layer having a light emitting outer surface;
   (c) an encapsulant layer of transparent resin covering the outer light emitting outer surface,

wherein the at least one solid state light source units are facing the input end of a light guide or a lens facing the tooth surface, and
wherein the intensity ratio of the first and second peaks is adjusted to a ratio of 1:3 to 1:4.

2. The dental curing light according to claim 1, wherein the radiation output comprising a third peak in the electromagnetic radiation spectrum in the range of 420 to 440 nm.

3. The dental curing light according to claim 1 or 2, wherein the solid-state light source units are arranged in an array of at least four light source units and/or wherein the solid-state light source units are light emitting diodes.

4. The dental curing light according to any one of the preceding claims, wherein the first layer comprising a second particulate phosphor fluorescing with a peak in the range of from 420 to 440 nm, dispersed in the continuous phase.

5. The dental curing light according to any one of claims 2 to 4, wherein the dental curing light further comprises a second layer covering at least a portion of the light emitting outer surface of the first layer of each solid-state light source units, the second layer comprising a particulate phosphor absorbing a part of the primary radiation and converting the primary radiation into a secondary radiation having a different wavelength by fluorescing with a peak in the range of from 420 to 440 nm, the particulate phosphor being dispersed in a continuous phase transparent to primary and secondary radiation peaks, the second layer having a light emitting outer surface.

6. The dental curing light according to any one of the preceding claims, wherein continuous phase is resin, glass or silicone.

7. The dental curing light according to any one of the preceding claims, wherein the first and/or second layers are coating layers.

8. The dental curing light according to claim 6, wherein the top surface of each solid-state light source unit, and preferably the lateral surfaces of each solid-state light source unit, is coated.

9. The dental curing light according to any one of the preceding claims, wherein the area of the first and second peaks under the intensity curve represents at least 80 % of the area of the output spectrum in the range of from 200 to 800 nm.

10. The dental curing light according to any one of the preceding claims, wherein the entire area covered by the one or more solid-state light source units arranged in the dental curing light may be covered by a circle having a diameter of at least 8 mm.

11. The dental curing light according to any one of the preceding claims, wherein the light guide is selected from optical fibers, waveguides, and light pipes.

12. The dental curing light according to any one of the preceding claims, wherein the particulate phosphor comprises:

$LiCaPO_4: EU_{2+}$

$Ba_3LaNa(PO_4)_3F: Eu_{2+}$

$BaHfSi_3O_9: Eu_{2+}$

$Ca_2LuScZrAl_2GeO_{12}: Ce_{3+}$

$Ca_3Hf_2SiAl_2O_{12}: Ce_{3+}$

$Ca_3Zr_2SiGa_2O_{12}: Ce_{3+}$

$CaLaGa_3S_6O: Ce_{3+}$

$Ca_2B_5O_9Br: Eu_{2+}$

$Na_{3-2x}Sc_2(PO_4)_3: xEu_{2+}$

$SrLu_2O_4$: $Ce_{3+}$

$(Sr,Mg)_2SiO_4$: EU2,

13. The dental curing light according to any one of the preceding claims, wherein the continuous phase has a refractory index which is within 5% of the refractive index of the material of the solid-state light source.

14. The dental curing light according to any one of the preceding claims, wherein the input end input end is coupled with lenses or other optical components to focus or collimate the incoming light.

15. The dental curing light according to any one of the preceding claims, wherein the intensity ratio of the first and second peaks is adjusted by the thickness, or the covering percentage of the said coating layer, or the concentration of the first and/or second particulate phosphor.

**Fig. 1**

**Fig. 2**

Intensity vs. Wavelength vs. Distance with Noise

Fig. 3

Intensity vs. Wavelength vs. Distance

**Fig. 4**

**Fig. 5**

A-A (1.5)

**Fig. 6**

Fig. 7

(a) LED housing

(b) LEDs through orange filter

(c) 460 nm filter

(d) 400 nm filter

Irradiance (mW/cm²)

>2,000
2,000
1,800
1,600
1,400
1,200
1,000
800
600
400
200

Europäisches
Patentamt

European
Patent Office

Office européen
des brevets

# EUROPEAN SEARCH REPORT

**Application Number**

EP 23 20 1015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 101 877 421 B1 (KOREA PHOTONICS TECH INST [KR]) 11 July 2018 (2018-07-11) * abstract * * figures 3-8 * * paragraphs [0047] - [0075] * | 1-15 | INV. H01L33/50 H01L33/58 A61C13/15 |
| A | WO 2007/011850 A2 (ULTRADENT PRODUCTS INC [US]; SCOTT ROBERT R [US]; JESSOP DEE [US]) 25 January 2007 (2007-01-25) * figures 2-5 * * page 9, line 5 - page 12, line 29 * | 1-15 | |
| A | EP 1 336 389 A1 (G C DENTAL IND CORP [JP]) 20 August 2003 (2003-08-20) * figures 1,4 * * paragraphs [0026] - [0031] * * claims 1,4 * | 1-15 | |
| A | WO 2017/197191 A1 (DXM CO LTD [KR]; DENTAZON CORP [US]) 16 November 2017 (2017-11-16) * figures 5-9 * * page 10, line 18 - page 12, line 6 * | 1-15 | TECHNICAL FIELDS SEARCHED (IPC) H01L A61C |

The present search report has been drawn up for all claims

| Place of search | Date of completion of the search | Examiner |
|---|---|---|
| The Hague | 14 March 2024 | Adams, Richard |

EPO FORM 1503 03.82 (P04C01)

## ANNEX TO THE EUROPEAN SEARCH REPORT
## ON EUROPEAN PATENT APPLICATION NO.

**EP 23 20 1015**

This annex lists the patent family members relating to the patent documents cited in  the above-mentioned European search report.
The members are as contained in the European Patent Office EDP file on
The European Patent Office is in no way liable for these particulars which are merely given for the purpose of information.

**14-03-2024**

| Patent document cited in search report | | Publication date | Patent family member(s) | | Publication date |
|---|---|---|---|---|---|
| KR 101877421 | B1 | 11-07-2018 | NONE | | |
| WO 2007011850 | A2 | 25-01-2007 | US | 2007020578 A1 | 25-01-2007 |
| | | | US | 2008285302 A1 | 20-11-2008 |
| | | | WO | 2007011850 A2 | 25-01-2007 |
| EP 1336389 | A1 | 20-08-2003 | AT | E324082 T1 | 15-05-2006 |
| | | | AU | 2003200381 A1 | 04-09-2003 |
| | | | AU | 2003200462 A1 | 04-09-2003 |
| | | | DE | 60304752 T2 | 03-05-2007 |
| | | | EP | 1336389 A1 | 20-08-2003 |
| | | | US | 2003153903 A1 | 14-08-2003 |
| WO 2017197191 | A1 | 16-11-2017 | DE | 112017002442 T5 | 28-02-2019 |
| | | | KR | 101754935 B1 | 06-07-2017 |
| | | | WO | 2017197191 A1 | 16-11-2017 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PRICE, R. B. et al.** *International Dental Journal*, 2020, vol. 70, 407-417
- *Dent Mater*, 2015, vol. 31 (4), 339-350